# EUROPÄISCHE PATENTSCHRIFT

(11) **EP 1 517 809 B1**
(45) Veröffentlichungstag und Bekanntmachung des Hinweises auf die Patenterteilung: **20.07.2011**
(21) Anmeldenummer: 03752761.1
(22) Anmeldetag: 17.05.2003
(51) Int. Cl.: B60K 17/14, B62D 11/02

(54) **ELEKTRISCHES LENK-UND ANTRIEBSSYSTEM FÜR EIN FAHRZEUG MIT RADSEITENLENKUNG**
ELECTRIC STEERING AND DRIVE SYSTEM FOR A VEHICLE WITH WHEEL SIDE STEERING SYSTEM
SYSTEME DE DIRECTION ET D'ENTRAINEMENT ELECTRIQUE POUR UN VEHICULE A BRAQUAGE LATERAL DES ROUES

(30) Priorität: 21.05.2002 DE 10222812
(43) Veröffentlichungstag der Anmeldung: 30.03.2005
(73) Patentinhaber: Renk Aktiengesellschaft, 86947 Augsburg (DE)
(72) Erfinder: EGEN, Thomas, 86947 Weil (DE); WALTER, Alexander, 86161 Augsburg (DE); WITZENBERGER, Max, 86447 Aindling (DE)
(74) Vertreter: Grünberger, Christian Thomas
(86) Internationale Anmeldenummer: PCT/EP2003/005205
(87) Internationale Veröffentlichungsnummer: WO 2003/097395

(56) Entgegenhaltungen:
- WO-A1-02/083482
- WO-A1-02/083482
- DE-A- 3 728 171
- DE-A- 19 850 606
- DE-A- 19 905 137
- US-A- 1 997 974
- US-A- 4 579 181

## Beschreibung

Die Erfindung betrifft ein Elektrisches Lenk- und Antriebssystem für ein Fahrzeug mit Radseitenlenkung gemäß dem Oberbegriff vom Patentanspruch 1.

Radfahrzeuge werden üblicherweise durch Drehen von Rädern um deren Hochachse (Achsschenkel- oder Ackermann-Lenkung) gelenkt. Um den damit verbundenen zusätzlichen Aufwand für Lenkgestänge und Lagerung der gelenkten Räder mit mehreren freien Achsen zu vermeiden und um eine wesentlich höhere Beweglichkeit durch kleinere fahrbare Kurvenradien zu ermöglichen, kommt auch bei Radfahrzeugen die sogenannte Radseitenlenkung zum Einsatz, z. B. im Baugewerbe oder bei militärischen Radfahrzeugen. Bei der Radseitenlenkung müssen während der Kurvenfahrt die Räder der Kurveninnenseite des Fahrzeuges gebremst werden. Zumeist sind derartige Baufahrzeuge nur für langsame Geschwindigkeiten vorgesehen, da bei höheren Geschwindigkeiten zunehmende Bremsleistungen zum Lenken erforderlich sind.

Effiziente Antriebssysteme für schnelle Fahrzeuge mit Radseitenlenkung übertragen die an der kurveninneren Antriebsseite entstehende Bremsleistung an die kurvenäußere Antriebsseite. Aufgrund dieser regenerierten Bremsleistung, welche somit an der kurvenäußeren Antriebsseite zusätzlich zum Antrieb zur Verfügung steht, spricht man dabei auch von regenerativem Lenken.

Bei Fahrzeugen mit separaten elektrischen Antrieben für jede Antriebsseite oder für jedes Antriebs(ketten)rad muß die Leistungsfähigkeit dieser Elektromotoren nicht nur nach der Leistung des primären Energieerzeugers (z.B. Dieselmotor) ausgelegt werden, sondern auch nach der fließenden regenerativen Leistung.

Dies führt zu deutlich überdimensionierten Elektromotoren und aufwendigen Verkabelungen für die entsprechend großen elektrischen Ströme.

Aus der DE 198 50 606 ist eine derartige Anordnung für Kettenfahrzeuge bekannt. Es ist ein Verbrennungsmotor zum Antreiben eines Generators vorgesehen, der elektrische Leistung zum Antreiben des Fahrzeugs mittels elektrischer Antriebsmotoren erzeugt. Zum regenerativen Lenken ist eine elektrische Leistungsübertragung von den kurveninneren zu den kurvenäußeren Antriebsmotoren vorgesehen.

Aus der US 1 997 974 ist ein Radfahrzeug mit Radnabenmotoren bekannt. Dort sind die Motoren in den sonst brach liegenden Leerraum im Inneren der Räder verlegt, so daß im Fahrzeuginneren mehr Platz zur Verfügung steht.

Die DE 37 28 171 beschreibt eine elektro-mechanische Antriebsanlage für Vollkettenfahrzeuge nach dem Oberbegriff des Anspruchs 1. Im einfachsten Fall besteht dieses Antriebssystem aus einem elektrischen Fahrmotor, der beide Fahrzeug-Seiten über eine Zentralwelle in die gleiche Richtung antreibt und einem elektrischen Lenkmotor, der eine Nullwelle antreibt, deren Drehzahl auf die eine Seite positiv und auf die andere Seite negativ wirkt. Lenkdifferentiale links und rechts addieren die Drehzahlen der beiden Motoren und leiten die Summe weiter an die Kettenräder.

Diese Lösung bietet den Vorteil, daß die elektromechanische Lenkanlage ein mehrfaches der Lenkmotor-Nennleistung als sogenannte "regenerative Leistung" von der kurveninneren Antriebsseite zur kurvenäußeren Antriebsseite übertragen kann. Durch diesen elektro-mechanischen Leistungstransfer fließt die Blindleistung über die mechanische Getriebeanordnung und nicht über die Elektromotoren, so daß diese entsprechend der Primärleistung des Fahrzeugs ausgelegt werden können. Nachteilig gegenüber Antrieben mit Radnabenmotoren ist jedoch der im Inneren des Fahrzeugs benötigte Bauraum, welcher die Nutzungsmöglichkeiten einschränkt.

Die US 4, 579, 181 und die DE 199 05 137 A1 offenbaren Fahrzeuge mit rein elektrischen Antrieben ohne mechanische Kopplung.

Aufgabe der Erfindung ist es, einen effizienten und kompakten elektrischen Antrieb für ein Fahrzeug zu schaffen, der regeneratives Lenken erlaubt.

Diese Aufgabe wird erfindungsgemäß durch die Merkmale des Patentanspruchs 1 gelöst.

Durch die vorteilhafte Kombination von rein elektrisch funktionierenden Radnabenantrieben mit einer elektro-mechanischen Antriebsanlage, die das Prinzip einer "Nullwelle" verwendet, können in einem Fahrzeug mit Radseitenlenkung die Vorteile beider Systeme genutzt bzw. die Nachteile dieser Systeme vermieden werden.

Durch die vorteilhafte Kombination von Radnabenmotoren auf einer Achse mit dem Prinzip der Nullwelle eines elektro-mechanischen Antriebes an einer anderen Achse können die Radnabenmotoren alleine unter Berücksichtigung der am Fahrzeug tatsächlich installierten Antriebsleistung ausgelegt werden. Die gewaltige Überdimensionierung der Radnabenmotoren ist nicht mehr nötig, so daß aufgrund der kleineren Elektromotoren in besonders vorteilhafter Weise leichtere Fahrzeug möglich sind.

Die Erfindung ermöglicht in vorteilhafter Weise einen hoch integrierten elektrischen Antrieb mit hoher Beweglichkeit, der das vorhandene Volumen eines Fahrzeugs bei minimalem Gewicht optimal ausnützt.

Weitere Merkmale und Vorteile ergeben sich aus den Unteransprüchen in Verbindung mit der Beschreibung.

Nachfolgend werden die Merkmale der vorliegenden Erfindung anhand bevorzugter Ausführungsformen näher erläutert. In den zugehörigen schematischen Zeichnungen zeigt, die
- Fig. 1: ein Radfahrzeug mit Radnabenmotoren gemäß dem Stand der Technik,
- Fig. 2: ein erfindungsgemäßes Radfahrzeug, nach einer ersten Ausführungs- form und
- Fig. 3: eine weitere Ausführungsform eines erfindungsgemäßen Radfahrzeugs,
- Fig. 4: zeigt ein Kettenfahrzeug mit einer erfindungsgemäßen Antriebsanord- nung und
- Fig. 5: stellt einen elektro-mechanischen Antrieb gemäß dem Stand der Technik dar.

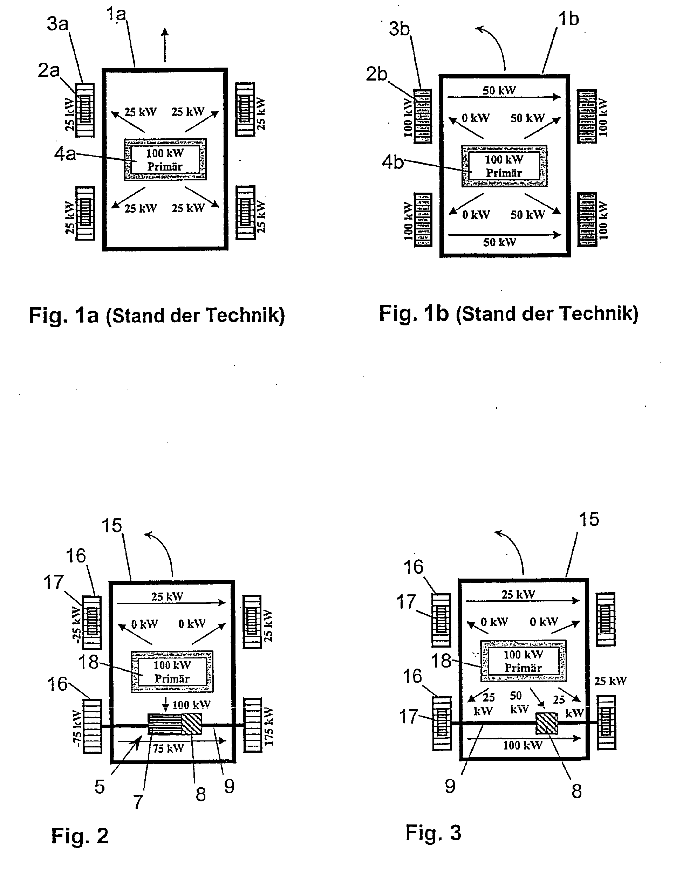

In Fig. 1 a ist ein Fahrzeug 1a mit vier Rädern 3a dargestellt, die jeweils über Radnabenmotoren 2a gemäß dem Stand der Technik angetrieben werden. Zur Bereitstellung von elektrischer Leistung ist ein Verbrennungsmotor vorgesehen, der einen Stromgenerator als Stromquelle 4a antreibt. Dieses Fahrzeug 1a ist lediglich für Geradeausfahrt ausgelegt, bzw. zum Lenken werden die kurveninneren Räder 3a nur gebremst, das heißt die vorhandene kinetische Energie wird in Wärme umgewandelt. Da hier kein regeneratives Lenken vorgesehen ist - also der Leistungstransfer von der kurveninneren zur kurvenäußeren Fahrzeugseite - können die Radnabenmotoren 2a alleine auf der Grundlage der elektrischen Leistung aus der Stromquelle 4a ausgelegt werden. Im dargestellten Beispiel wird von 100 Kilowatt Leistung der Stromquelle 4a ausgegangen, die gleichmäßig auf alle vier Radnabenmotoren 2a aufgeteilt wird. Für jeden Radnabenmotor 2a muß deshalb eine maximale Leistungsaufnahme von 25 Kilowatt angenommen werden und die Motoren können entsprechend klein dimensioniert werden.

In Fig. 1b ist die Auslegung des gleichen Fahrzeugs beim Fahren einer Linkskurve - unter Berücksichtigung von regenerativem Lenken - gemäß dem Stand der Technik dargestellt. Ausgehend von 100 Kilowatt Leistung aus der Stromquelle 4b und Einrichtungen zum Übertragen der elektrischen Leistung von den kurveninneren Radnabenmotoren 2b, welche in diesem Fahrzustand als Generatoren arbeiten, zu den Radnabenmotoren 2b der Kurvenaußenseite ergibt sich folgende Energie- bzw. Leistungsbilanz. Die gesamte verfügbare elektrische Leistung aus der Stromquelle 4b wird durch entsprechende Steuerung der Leistungselektronik an die kurvenäußeren Radnabenmotoren 2b abgegeben und zwar 50 Kilowatt auf das vordere und 50 Kilowatt auf das hintere Rad 3b. Weiterhin wird die Bremsleistung an den kurveninneren Radnabenmotoren 2b im Generatorbetrieb zu elektrischer Antriebsleistung umgewandelt, welche ebenfalls den kurvenäußeren Radnabenmotoren 2b zugeführt wird. Dies bedeutet nochmals jeweils 50 Kilowatt Leistung für den vorderen und hinteren Radnabenmotor 2b der Kurvenaußenseite. Um diese extremen Fahrzustände bewältigen zu können, müssen die Radnabenmotoren 2b auf 100 Kilowatt maximale Leistungsaufnahme ausgelegt werden. Diese erforderliche Überdimensionierung der Antriebsmotoren 2b erhöht die Fahrzeugmasse und erfordert entsprechenden Bauraum, so daß - aufgrund der nur begrenzt vergrößerbaren Raddurchmessern - die Antriebsleistung des Fahrzeugs begrenzet ist oder entsprechende Motoren außerhalb der Radnabe vorzusehen sind. Für diese muß dann gegebenenfalls Bauraum im Inneren des Fahrzeuges vorgesehen werden.

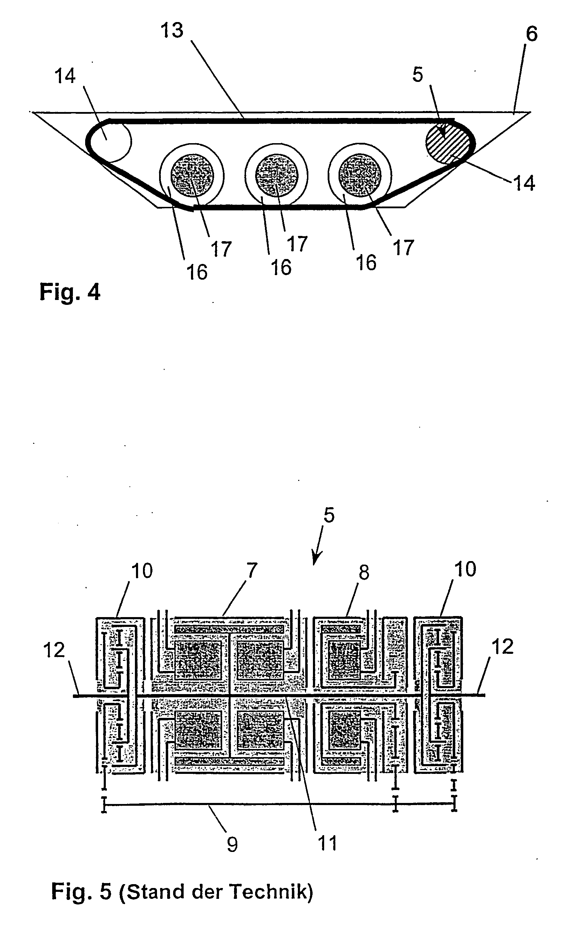

Eine erste erfindungsgemäße Ausführungsform ist in Fig. 2 an einem Radfahrzeug 15 dargestellt. Ausgehend von einer Stromquelle 18 mit einer elektrischen Leistung von 100 Kilowatt sind an den Rädern 16 der Vorderachse vorzugsweise Radnabenmotoren 17 vorgesehen und an der hinteren Achse ein elektromechanischer Antrieb 5. Für die Geradeausfahrt werden von der Stromquelle 18 an beide angetriebenen Achsen jeweils 50 Kilowatt Antriebsleistung abgegeben. Der elektro-mechanische Antrieb 5 ist aus einem elektrischen Fahrmotor 7, der die beiden Antriebsseiten gleichmäßig antreibt, und einem Lenkmotor 8, zum Übertragen von regenerativer Leistung, aufgebaut. Die prinzipielle Funktion des elektromechanischen Antriebs 5 geht aus der schematischen Fig. 5 hervor. Der Fahrmotor 7 treibt über eine Zentralwelle 11 ein linkes und rechtes Lenkdifferentiaigetriebe 10 an, welche über ihre Abtriebswellen 12 Räder oder Kettenräder antreiben. Die Lenkdifferentiale 10 sind über eine Nullwelle 9 mechanisch miteinander verbunden. Durch den Antrieb der Nullwelle 9 kann der Lenkmotor 8 ein mehrfaches seiner eigenen Nennleistung als regenerative Leistung von der kurveninneren zur kurvenäußeren Seite übertragen. Aufgrund dieser höheren Effizienz der elektromechanischen gegenüber der rein elektrischen Leistungsübertragung, kann der Lenkmotor 8 verhältnismäßig klein dimensioniert werden. Der Lenkmotor 8 kann im Fahrzeuginnenraum oder außerhalb des Fahrzeugs angeordnet werden.

Bei der in Figur 2 dargestellten Kurvenfahrt des Fahrzeugs 15 wird ein Großteil der regenerativen Leistung von der kurveninneren Seite über die mechanische Nullwelle 9 auf die kurvenäußere Fahrzeugseite übertragen und nur ein kleiner Teil über die rein elektrische Kopplung an der anderen Achse. Bei der beispielhaft dargestellten Kurvenfahrt wird die gesamte Leistung der Stromquelle 18 dem elektro-mechanischen Antrieb 5 zugeführt, so daß der Lenkmotor 8 eine regenerative Leistung von 75 Kilowatt zur kurvenäußeren Seite überträgt, die sich mit der Leistung der Stromquelle 18 zu einer Gesamtleistung von 175 Kilowatt summiert. Da die Radnabenmotoren 17 der anderen Achse bei Kurvenfahrt keine Leistung aus der Stromquelle 18 erhalten, muß lediglich eine regenerative Leistung von 25 Kilowatt rein elektrisch auf die kurvenäußere Fahrzeugseite übertragen werden. Aufgrund dieser vorteilhaften Aufteilung der Leistungsübertragung müssen die Radnabenmotoren 17 nicht überdimensioniert werden. Die Radnabenmotoren 17 können daher auf eine wesentlich geringere maximale Strom- bzw. Leistungsaufnahme ausgelegt werden - im vorliegenden Ausführungsbeispiel könnten also beispielsweise 25 Kilowatt pro Radnabenmotor 17 vorgesehen werden.

Zum Lenken des Fahrzeugs 15 kann es auch zweckmäßig sein, die Radnabenmotoren 17 der rein elektrischen Achse gleichmäßig weiter zu betreiben, ohne elektrische Leistungsübertragung vorzusehen, und die regenerative Lenkleistung alleine über die elektro-mechanische Nullwelle 9 zu übertragen. Ebenso ist es möglich den kurveninneren Radnabenmotor 17 abzuschalten oder herunter zu regeln, um den zu fahrenden Kurvenradius zu beeinflussen.

Diese Ausführungsform nutzt in vorteilhafter Weise den Bauraum in den Radnaben der einen Achse und aufgrund der normalen Dimensionierung der Motoren ergibt sich ein niedrigeres Fahrzeuggewicht sowie ein niedrigerer Investitionsaufwand für den Antrieb. Bei Ausführungen mit Elektromotoren im Inneren des Fahrzeuges - statt den Radnabenmotoren - muß selbstverständlich entsprechender Bauraum im Fahrzeug vorgesehen werden.

In Fig. 3 ist eine weitere Ausführungsform dargestellt, in welcher die kompakte Baugruppe des elektro-mechanischen Antriebs aufgelöst ist. Statt einem Fahrmotor 7 im Inneren des Fahrzeuges 15 sind zwei Radnabenmotoren 17 innerhalb der Räder 16 der mechanisch gekoppelten Achse vorgesehen. Diese Radnabenmotoren 17 werden vorzugsweise genauso dimensioniert wie die an einer oder mehreren anderen Achsen. In diesem Beispiel sind 25 Kilowatt maximale Leistungsaufnahme vorgesehen. Die Lenkdifferentiale können ebenfalls in die Radnabe integriert werden oder am-im Fahrzeug 15 angeordneten - Lenkmotor 8 vorgesehen werden. Durch diese vorteilhafte Antriebsanordnung wird weiterer Raum innerhalb des Fahrzeuges frei, weil nur noch die Nullwelle 9 und der Lenkmotor 8 im Inneren angeordnet sind.

In Fig. 4 ist ein Kettenfahrzeug 6 mit einem erfindungsgemäßen Antrieb dargestellt. Die Kette 13 wird über zwei Umlenkrollen 14 und mehrere Kettenräder 16 geführt, wobei an einer Umlenkrolle 14 ein elektro-mechanischer Antrieb 5 und innerhalb der Kettenräder 16 jeweils Radnabenmotoren 17 vorgesehen sind. Die nicht sichtbare andere Antriebsseite ist selbstverständlich analog dazu aufgebaut. Die Radnabenmotoren 17 können für den Vortrieb sorgen und die elektromechanisch angetriebene Achse kann die Blindleistung übertragen.

Bei allen beschriebenen Ausführungsbeispielen wird als Stromquelle 18 vorzugsweise ein oder mehrere Verbrennungsmotoren mit elektrischen Strom-Generatoren eingesetzt. Selbstverständlich sind jedoch auch entsprechend leistungsfähige Batterien bzw. sonstige Speichereinrichtungen für elektrische Energie möglich. Für - im Bewegungsradius eingeschränkte - Fahrzeuge könnten auch elektrische Leitungen für die Leistungszufuhr vorgesehen werden.

Die beschriebenen Fahrzeuge 6, 15 sind jeweils mit entsprechenden Leistungselektronikteilen und Steuerungen zur betriebssicheren Verteilung der Leistung und Regelung der Antriebe ausgestattet - gemäß den Vorschriften für die Straßenzulassung - und gewährleisten einen verkehrssicheren Betrieb.

Neben den dargestellten und beschriebenen zweiachsigen Radfahrzeugen und dem Kettenfahrzeug sind selbstverständlich auch Ausführungen mit mehr als zwei Achsen möglich, wobei bei allen Varianten mindestens eine Achse mit einer mechanischen Kopplung versehen sein muß, um die regenerative Leistung von einer zur anderen Antriebsseite zu übertragen.

Bei einem vier-achsigen Fahrzeug können beispielsweise zwei Achsen mit mechanisch entkoppelten Radnabenantrieben und zwei Achsen jeweils mit elektromechanischen Antrieben ausgestattet sein.

Bei Fahrzeugen mit mehr als zwei Achsen, können auch mehrere Räder über drehmomentverteilende oder drehzahlausgleichende Getriebe-Elemente an einen elektro-mechanischen Antrieb gekoppelt werden.

Der wesentliche Kern der Erfindung besteht darin, die Übertragung der regenerativen Lenkleistung weitgehend mittels einer mechanischen Kopplung zu übertragen, da diese wesentlich effizienter ist als der rein elektrische Leistungstransfer. Durch diese erfindungswesentliche Aufgabenteüung, die Antriebsleistung elektrisch und die regenerative Lenkleistung mechanisch zu übertragen, ergibt sich eine Gewichtsersparnis sowie eine Investitionsersparnis bei den Antriebsmotoren und eine einfachere Verkabelung des Fahrzeuges. Ein erfindungsgemäß ausgestattetes Fahrzeug weist einen hoch integrierten elektrischen Antrieb mit hoher Beweglichkeit auf, der das Fahrzeugvolumen bei minimalem Gewicht optimal ausnützt.

### Bezugszeichenliste

- 1 a, b: Fahrzeug
- 2a, b: Radnabenmotor
- 3a, b: Rad
- 4a, b: Stromquelle
- 5: Elektromechanischer Antrieb
- 6: Kettenfahrzeug
- 7: Fahrmotor
- 8: Lenkmotor
- 9: Nullwelle
- 10: Lenkdifferential
- 11: Zentralwelle
- 12: Abtrieb
- 13: Kette
- 14: Umlenkrolle
- 15: Fahrzeug
- 16: (Ketten-)Rad
- 17: Radnabenmotor
- 18: Stromquelle

## Patentansprüche

1. Elektrisches Lenk- und Antriebssystem für ein Fahrzeug (6; 15) mit Radseitenlenkung mit mindestens einer elektrisch angetriebenen Achse, an der eine mechanische Kopplung zwischen
den Antriebsseiten vorgesehen ist, um Leistung von einer zur anderen Antriebsseite zu übertragen, **gekennzeichnet durch** mindestens eine andere angetriebene Achse, an der eine rein elektrische Übertragung von Antriebsleistung vorgesehen ist, wobei die Übertragung einer regenerativen Lenkleistung weitgehend mittels der mechanischen Kopplung übertragen wird.

2. Elektrisches Lenk- und Antriebssystem nach Anspruch 1, **dadurch gekennzeichnet, dass** die mechanische Kopplung zwischen den Antriebsseiten aus mindestens einem Differentialgetriebe (10), einem Lenkmotor (8) und einer Welle (9) besteht.

3. Elektrisches Lenk- und Antriebssystem nach Anspruch 1, **dadurch gekennzeichnet, dass** die rein elektrische Übertragung von Antriebsleistung an den anderen angetriebenen Achsen zur Übertragung von Lenk-Leistung von einer zur anderen Antriebsseite vorgesehen ist.

4. Elektrisches Lenk- und Antriebssystem nach einem der vorangehenden Ansprüche, **dadurch gekennzeichnet, dass** an der mechanisch gekoppelten Achse ein elektrischer Fahrmotor (7) und ein elektrischer Lenkmotor (8) vorgesehen sind.

5. Elektrisches Lenk- und Antriebssystem nach einem der vorangehenden Ansprüche, **dadurch gekennzeichnet, dass** an allen angetriebenen Achsen in die Radnabe integrierte Elektromotoren (17) vorgesehen sind.

6. Elektrisches Lenk- und Antriebssystem nach einem der vorangehenden Ansprüche, **dadurch gekennzeichnet, dass** an der mechanischen Kopplung jeweils Drehmoment verteilende oder Drehzahl ausgleichende Elemente vorgesehen sind, an welche mehrere Räder (16, 14) einer Fahrzeugseite koppelbar sind.

7. Elektrisches Lenk- und Antriebssystem nach einem der vorangehenden Ansprüche, **dadurch gekennzeichnet, dass** das Fahrzeug ein Rad- oder Kettenfahrzeug ist.

## Claims

1. An electrical steering and drive system for a vehicle (6; 15) with wheel-based steering with at least one electrically driven axle for which a mechanical coupling between the drive sides is provided in order to transmit power from one drive side to the other, **characterized by** at least another driven axle and a purely electrical transmission of drive power being provided on this driven axle whereas the transmission of a regenerative drive power is to a large extend transmitted by the mechanical coupling.

2. The electrical steering and drive system as claimed in claim 1, **characterized in that** the mechanical coupling between the drive sides is composed of at least one differential gear mechanism (10), a steering motor (8) and a shaft (9).

3. The electrical steering and drive system as claimed in claim 1, **characterized in that** the purely electrical transmission of drive power to the other driven axles is provided for transmitting the steering power from one drive side to the other.

4. The electrical steering and drive system as claimed in one of the preceding claims, **characterized in that** an electric driving motor (7) and an electric steering motor (8) are provided on the mechanically coupled axle.

5. The electrical steering and drive system as claimed in one of the preceding claims, **characterized in that** electric motors (17) which are integrated into the wheel hub are provided on all the driven axles.

6. The electrical steering and drive system as claimed in one of the preceding claims, **characterized in that** elements which respectively distribute torque or compensate for rotational speed, and to which a plurality of wheels (16, 14) of one side of the vehicle can be coupled, are provided on the mechanical coupling.

7. The electrical steering and drive system as claimed in one of the preceding claims, **characterized in that** the vehicle is a wheeled vehicle or tracked vehicle.

## Revendications

1. Système de direction et d'entraînement électrique de véhicule (6, 15) comportant un guidage latéral par les roues, ayant au moins un essieu entraîné par un moteur électrique et comportant un couplage mécanique entre les côtés entraînés pour transférer de la puissance d'un côté entraîné à l'autre,
système **caractérisé par**
au moins un autre essieu entraîné comportant un transfert purement électrique de la puissance motrice,
le transfert d'une puissance de guidage à régénération, étant fait dans une très large mesure par le couplage mécanique.

2. Système de guidage et d'entraînement électrique selon la revendication 1,
**caractérisé en ce que**
le couplage mécanique entre les côtés d'entraînement se compose d'au moins un différentiel (10), d'un moteur de guidage (8) et d'un arbre (9).

3. Système de guidage et d'entraînement électrique selon la revendication 1,
**caractérisé en ce que**
le transfert purement électrique de la puissance motrice aux autres essieux entraînés est prévue pour faire passer la puissance directrice d'un côté d'entraînement à l'autre.

4. Système de guidage et d'entraînement électrique selon l'une des revendications précédentes,
**caractérisé en ce que**
l'essieu à couplage mécanique comporte un moteur électrique de roulage (7) et un moteur électrique de guidage (8).

5. Système de guidage et d'entraînement électrique selon l'une des revendications précédentes,
**caractérisé en ce que**
tous les essieux-moteur comportent des moteurs électriques (17) intégrés dans le moyeu.

6. Système de guidage et d'entraînement électrique selon l'une des revendications précédentes,
**caractérisé en ce que**
le couplage mécanique comporte respectivement des éléments de répartition de couple ou de compensation de vitesse de rotation, auxquels peuvent être reliées plusieurs roues (16, 14) d'un côté du véhicule.

7. Système de guidage et d'entraînement électrique selon l'une des revendications précédentes,
**caractérisé en ce que**
le véhicule est un véhicule à roues ou un véhicule à chenilles.
